# EUROPÄISCHE PATENTSCHRIFT

(11) **EP 3 701 139 B1**
(45) Veröffentlichungstag und Bekanntmachung des Hinweises auf die Patenterteilung: **10.01.2024**
(21) Anmeldenummer: 18782924.7
(22) Anmeldetag: 28.09.2018
(51) Int. Cl.: F02M 21/02, F04B 11/00, F04B 9/08

(54) **KRAFTSTOFFFÖRDEREINRICHTUNG FÜR KRYOGENE KRAFTSTOFFE, VERFAHREN ZUM BETREIBEN EINER KRAFTSTOFFFÖRDEREINRICHTUNG FÜR KRYOGENE KRAFTSTOFFE**
FUEL SUPPLY DEVICE FOR CRYOGENIC FUELS, AND METHOD FOR OPERATING A FUEL SUPPLY DEVICE FOR CRYOGENIC FUELS
DISPOSITIF D'ALIMENTATION EN CARBURANT POUR CARBURANTS CRYOGÉNIQUES ET PROCÉDÉ POUR FAIRE FONCTIONNER UN DISPOSITIF D'ALIMENTATION EN CARBURANT POUR CARBURANTS CRYOGÉNIQUES

(30) Priorität: 26.10.2017 DE 102017219224
(43) Veröffentlichungstag der Anmeldung: 02.09.2020
(73) Patentinhaber: Robert Bosch GmbH, 70442 Stuttgart (DE)
(72) Erfinder: SCHNITTGER, Dirk, 71640 Ludwigsburg (DE); BEITER, Andreas, 72414 Rangendingen (DE); VIERECK, Markus, 70469 Stuttgart (DE)
(86) Internationale Anmeldenummer: PCT/EP2018/076465
(87) Internationale Veröffentlichungsnummer: WO 2019/081159

(56) Entgegenhaltungen:
- EP-A1- 2 541 062
- DE-A1- 19 736 337
- US-A- 4 878 350
- US-A- 5 529 466
- US-A- 5 884 488

## Beschreibung

Die Erfindung betrifft eine Kraftstofffördereinrichtung für kryogene Kraftstoffe mit den Merkmalen des Oberbegriffs des Anspruchs 1. Ferner betrifft die Erfindung ein Verfahren zum Betreiben einer Kraftstofffördereinrichtung für kryogene Kraftstoffe mit den Merkmalen des Oberbegriffs des Anspruchs 7.

Bei dem kryogenen Kraftstoff kann es sich insbesondere um Erdgas ("Natural Gas" = NG) handeln, das an Bord eines Kraftfahrzeugs zum Betreiben einer Brennkraftmaschine in flüssiger Form ("Liquefied Natural Gas" = LNG) in einem speziell dafür ausgelegten Tank bevorratet wird.

### Stand der Technik

Kryogene Kraftstoffe, wie beispielsweise Erdgas, werden vor dem Einblasen in einen Brennraum der Brennkraftmaschine mittels einer Hochdruckpumpe verdichtet. Diese kann als Kolbenpumpe, insbesondere als Einstempelpumpe, ausgebildet sein, die volumetrisch nicht ausgeglichen ist, so dass - insbesondere in einem Niederdruckbereich der Hochdruckpumpe - unerwünschte Volumen- bzw. Druckschwankungen auftreten. Zur Versorgung der Hochdruckpumpe mit dem kryogenen Kraftstoff kann eine Vorförderpumpe vorgesehen sein, die zum Ausgleich der Volumenschwankungen der Hochdruckpumpe in der Regel auf den peak-Volumenstrom der Hochdruckpumpe ausgelegt wird. Das heißt, dass die Vorförderpumpe in der Regel überdimensioniert ist, was sich negativ auf den Wirkungsgrad der Kraftstofffördereinrichtung auswirkt.

Die Dokumente US 5 884 488 A und DE 197 36 337 A1 offenbaren eine Kraftstofffördereinrichtung für kryogene Kraftstoffe.

Das Dokument US 4 878 350 A offenbart eine Pulsationsdämpfungsvorrichtung für kryogene Dienste und die Dokument US 5 529 466 A und EP 2 541 062 A1 offenbaren eine Pumpen für kryogene Kraftstoffe.

Der Erfindung liegt daher die Aufgabe zugrunde, eine Kraftstofffördereinrichtung für kryogene Kraftstoffe bereitzustellen, deren Wirkungsgrad verbessert ist. Insbesondere sollen Volumen- bzw. Druckschwankungen im Niederdruckbereich einer Hochdruckpumpe der Kraftstofffördereinrichtung verringert werden.

Zur Lösung der Aufgabe werden die Kraftstofffördereinrichtung mit den Merkmalen des Anspruchs 1 sowie das Verfahren mit den Merkmalen des Anspruchs 7 vorgeschlagen.

Vorteilhafte Weiterbildungen der Erfindung sind den jeweiligen Unteransprüchen zu entnehmen.

### Offenbarung der Erfindung

Die vorgeschlagene Kraftstofffördereinrichtung für kryogene Kraftstoffe umfasst eine Vorförderpumpe und eine Hochdruckpumpe, wobei die Hochdruckpumpe einen hin und her beweglichen Kolben aufweist, der einen Kompressionsraum begrenzt. Das heißt, dass die Hochdruckpumpe als Kolbenpumpe bzw. als volumetrisch nicht ausgeglichene Pumpe ausgeführt ist. Erfindungsgemäß ist der Kompressionsraum über ein Saugventil mit einem Niederdruckspeichervolumen verbindbar, das über die Vorförderpumpe mit kryogenem Kraftstoff befüllbar ist.

Über die Anordnung eines Niederdruckspeichervolumens zwischen der Vorförderpumpe und der Hochdruckpumpe können Volumenschwankungen der Hochdruckpumpe ausgeglichen oder zumindest geglättet werden. Hieraus folgt, dass der Niederdruckbereich der Hochdruckpumpe weniger stark durch Volumen- bzw. Druckschwankungen belastet ist. Zugleich kann die Vorförderpumpe auf den über einen Pumpenhub gemittelten maximalen Volumenstrom der Hochdruckpumpe ausgelegt werden, so dass die Vorförderpumpe nicht überdimensioniert werden muss. Vielmehr ist über das zwischengeschaltete Niederdruckspeichervolumen ein weitgehend konstantes Druckniveau am Saugventil der Hochdruckpumpe sichergestellt.

Sofern - gemäß einer bevorzugten Ausgestaltung der erfindungsgemäßen Kraftstofffördereinrichtung - die Vorförderpumpe über eine Niederdruckleitung mit der Hochdruckpumpe verbunden ist, nimmt auch die Belastung der Niederdruckleitung ab. Ferner kann der Leitungsdurchmesser der Niederdruckleitung reduziert werden, so dass der Bauraumbedarf der Kraftstofffördereinrichtung verringert wird. Ein reduzierter Leitungsdurchmesser wirkt sich zudem als Vorteil in Bezug auf die Kaltfahrdauer und den Kaltfahrwärmeeintrag aus.

Vorteilhafterweise ist das Niederdruckspeichervolumen in die Hochdruckpumpe integriert, und zwar vorzugsweise im Bereich eines Pumpenkopfes der Hochdruckpumpe. Auf diese Weise wirkt sich das zusätzlich vorgesehene Niederdruckspeichervolumen nicht negativ auf den Bauraumbedarf der Kraftstofffördereinrichtung aus. Zudem bleibt bzw. bleiben die Anzahl der Gehäusebauteile und/oder der Aufwand zur Isolierung des Gehäuses weitgehend unverändert.

Das Niederdruckspeichervolumen kann beispielsweise durch eine Kavität im Bereich des Pumpenkopfes der Hochdruckpumpe gebildet werden, dessen Volumen unveränderlich ist. Eine Speicherwirkung kann in diesem Fall über die Kompressibilität des kryogenen Kraftstoffs erzielt werden.

Erfindungsgemäß wird vorgeschlagen, dass das Niederdruckspeichervolumen durch ein bewegliches und/oder elastisch verformbares Element begrenzt wird. Durch eine Bewegung und/oder elastische Verformung des Elements kann somit das Niederdruckspeichervolumen verändert werden. Auf diese Weise kann eine deutlich verbesserte Speicherwirkung erzielt werden. Das Element kann insbesondere ein hin und her beweglicher Kolben, eine elastisch verformbare Membran oder ein Well- oder Faltenbalg sein. Die Bewegung und/oder elastische Verformung des Elements kann in diesen Fällen über die am Element anliegenden Druckverhältnisse gesteuert werden. Steigt der Druck im Niederdruckspeichervolumen an, da die Vorförderpumpe fördert, aber von der Hochdruckpumpe kein Kraftstoff aus dem Niederdruckspeichervolumen entnommen wird, wird das Element in der Weise bewegt und/oder elastisch verformt, dass das Niederdruckspeichervolumen zur Schaffung eines Druckausgleichs zunimmt. Mit der Entnahme von Kraftstoff durch die Hochdruckpumpe fällt der Druck im Niederdruckspeichervolumen ab, so dass eine Rückstellung des Elements bewirkt wird.

Ferner wird vorgeschlagen, dass das bewegliche und/oder elastisch verformbare Element von der Federkraft einer Feder beaufschlagt ist. Die Bewegung und/oder elastische Verformung des Elements erfolgt dann entgegen der Federkraft der Feder, die somit eine schnelle Rückstellung des Elements begünstigt. Die Feder, die beispielsweise als einfache Schraubendruckfeder ausgeführt sein kann, ist daher bevorzugt außerhalb des Niederdruckspeichervolumens angeordnet.

Alternativ oder ergänzend wird vorgeschlagen, dass das bewegliche und/oder elastisch verformbare Element das Niederdruckspeichervolumen von einem weiteren Volumen trennt, das über eine Rücklaufleitung mit einem Tank zur Bevorratung des kryogenen Kraftstoffs verbunden oder verbindbar ist. Das heißt, dass das Element gegen den Tankdruck bewegt bzw. elastisch verformt wird, sofern eine dauerhafte Verbindung des weiteren Volumens mit dem Tank besteht. Die Verbindung kann jedoch auch von der Lage oder Form des Elements abhängig sein, so dass sie nur zeitweise besteht, um eine Entlastung des weiteren Volumens zu bewirken.

Gemäß einer bevorzugten Ausführungsform der Erfindung ist in Abhängigkeit von der Lage des Elements das Niederdruckspeichervolumen mit der Rücklaufleitung verbindbar. Das Element kann somit zugleich als Druckbegrenzungseinrichtung eingesetzt werden. Die Verbindung ist daher bevorzugt hergestellt, wenn das Element eine Lage eingenommen hat, in der das Niederdruckspeichervolumen ein vorgegebenes Maximum erreicht hat. Über die Verbindung mit der Rücklaufleitung kann dann überschüssiger Kraftstoff zurück in den Tank geleitet werden. Dadurch ist sichergestellt, dass der Druck im Niederdruckspeichervolumen einen vorgegebenen Grenzwert nicht übersteigt.

Des Weiteren wird vorgeschlagen, dass die Vorförderpumpe als Seitenkanalpumpe oder als Kreiselpumpe ausgeführt ist. Diese Pumpen sind volumetrisch ausgeglichen, das heißt, dass sie einen hohen Gleichförmigkeitsgrad besitzen, um Volumen- bzw. Druckschwankungen entgegen zu wirken.

Zur Lösung der eingangs genannten Aufgabe wird ferner ein Verfahren zum Betreiben einer Kraftstofffördereinrichtung für kryogene Kraftstoffe angegeben. Bei dem Verfahren wird der kryogene Kraftstoff mittels einer Vorförderpumpe einer Hochdruckpumpe zugeführt. Erfindungsgemäß wird zumindest ein Teil der Fördermenge der Vorförderpumpe in einem Niederdruckspeichervolumen, das in die Hochdruckpumpe integriert ist, vor der Förderung auf Hochdruck zwischengespeichert.

Der im Niederdruckspeichervolumen zwischengespeicherte Kraftstoff hilft Volumenschwankungen im Niederdruckbereich der Hochdruckpumpe auszugleichen. Damit sinkt die Belastung im Niederdruckbereich der Hochdruckpumpe sowie der hieran anschließenden Leitungen.

Ferner wird vorgeschlagen, dass die Vorförderpumpe auf den über einen Pumpenhub gemittelten maximalen Volumenstrom der Hochdruckpumpe ausgelegt wird. Das heißt, dass die Vorförderpumpe nicht überdimensioniert wird und der Wirkungsgrad der Kraftstofffördereinrichtung steigt.

Bevorzugte Ausführungsformen der Erfindung werden nachfolgend anhand der beigefügten Zeichnungen näher erläutert. Diese zeigen:
Fig. 1 eine schematischen Längsschnitt durch eine erfindungsgemäße Kraftstofffördereinrichtung gemäß einer ersten bevorzugten Ausführungsform,
Fig. 2 einen schematischen Längsschnitt durch eine Hochdruckpumpe einer erfindungsgemäßen Kraftstofffördereinrichtung gemäß einer zweiten bevorzugten Ausführungsform und
Fig. 3 einen schematischen Längsschnitt durch eine Hochdruckpumpe einer erfindungsgemäßen Kraftstofffördereinrichtung gemäß einer dritten bevorzugten Ausführungsform.

### Ausführliche Beschreibung der Zeichnungen

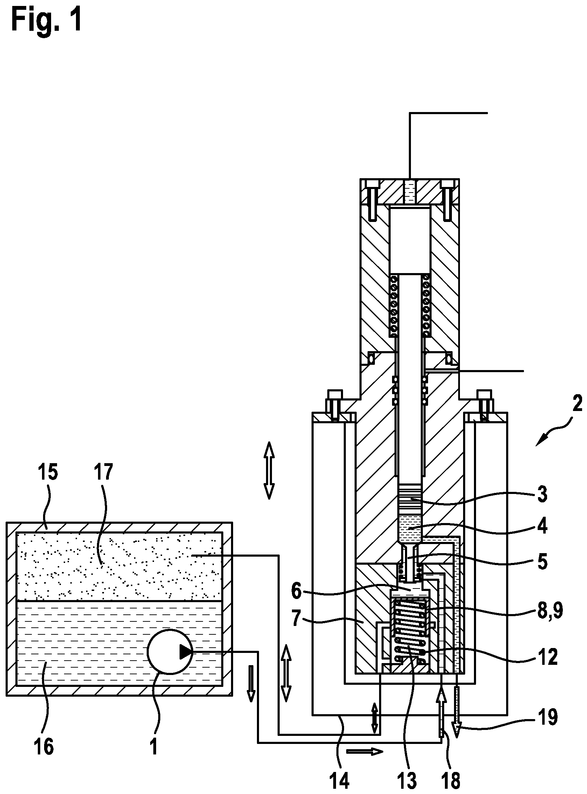

Die in der Fig. 1 dargestellte erfindungsgemäße Kraftstofffördereinrichtung umfasst eine Vorförderpumpe 1 und eine Hochdruckpumpe 2, wobei vorliegend die Vorförderpumpe 1 im Bodenbereich eines Tanks 15 zur Bevorratung eines kryogenen Kraftstoffs angeordnet ist. Dort befindet sich eine Flüssigphase 16 des Kraftstoffs, die von einer Gasphase 17 des Kraftstoffs überdeckt wird. Die Anordnung der Vorförderpumpe 1 im Tank 15 besitzt den Vorteil, dass der konstruktive Aufwand zur Verbindung der Vorförderpumpe 1 mit der Hochdruckpumpe 2 sinkt, da lediglich eine Niederdruckleitung 18 aus dem Tank 15 herausgeführt werden muss. Die Vorförderpumpe 1 kann insbesondere als Seitenkanal- oder Kreiselpumpe ausgeführt sein.

Die ferner vorgesehene Hochdruckpumpe 2 ist als Einstempelpumpe ausgeführt. Sie weist einen Kompressionsraum 4 auf, der von einem hin und her beweglichen Kolben 3 begrenzt wird und über ein Saugventil 5 mit kryogenem Kraftstoff befüllbar ist. Der Kraftstoff wird dabei einem Niederdruckspeichervolumen 6 entnommen, der in einen Pumpenkopf 7 der Hochdruckpumpe 2 integriert ist. Das Niederdruckspeichervolumen 6 wird über die Niederdruckleitung 18 mit kryogenem Kraftstoff befüllt. Das heißt, dass die Vorförderpumpe 1 in das Niederdruckspeichervolumen 6 fördert.

In der Fig. 1 wird das Niederdruckspeichervolumen 6 durch ein bewegliches Element 8 in Form eines Kolbens 9 begrenzt, der in Richtung des Niederdruckspeichervolumens 6 von der Federkraft einer Feder 12 beaufschlagt ist. Fördert die Vorförderpumpe 1 mehr Menge als von der Hochdruckpumpe 2 abgenommen wird, bewegt sich der Kolben 9 nach unten und das Niederdruckspeichervolumen 6 wird gefüllt. Dies ist der Fall, wenn während eines Arbeitshubs des Kolbens 3 der Hochdruckpumpe 2 kein Kraftstoff über das Saugventil 5 in den Kompressionsraum 4 strömt. Fördert die Vorförderpumpe 1 weniger Menge als von der Hochdruckpumpe 2 abgenommen wird, bewegt sich der Kolben 9 nach oben und das Niederdruckspeichervolumen 6 wird geleert. Dies ist der Fall, wenn während des Saughubs des Kolbens 3 der Hochdruckpumpe 2 mehr Kraftstoff über das Saugventil 5 in den Kompressionsraum 4 strömt, als von der Vorförderpumpe 1 gefördert wird. Über das veränderliche Niederdruckspeichervolumen 6 können somit Volumenschwankungen ausgeglichen werden.

Überschreitet der Druck im Niederdruckspeichervolumen 6 einen vorgegebenen Grenzwert, bewegt sich der Kolben 9 soweit nach unten, dass eine Verbindung des Niederdruckspeichervolumens 6 mit einer Rücklaufleitung 14 hergestellt ist. Auf diese Weise wird über den Kolben 9 zugleich eine Druckbegrenzungsfunktion realisiert.

Der im Kompressionsraum 4 der Hochdruckpumpe 2 verdichtete Kraftstoff wird über eine Hochdruckleitung 19 einem Pufferspeicher (nicht dargestellt) zugeführt. An den Pufferspeicher kann eine Einblaseinrichtung zum Einblasen des verdichteten Kraftstoffs in einen Brennraum einer Brennkraftmaschine angeschlossen sein.

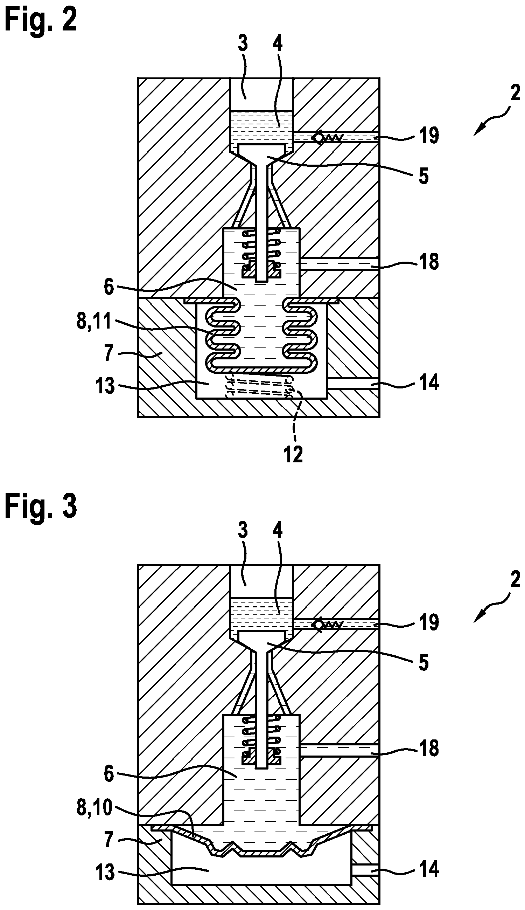

Der Fig. 2 ist ausschnittsweise eine erfindungsgemäße Kraftstofffördereinrichtung gemäß einer zweiten bevorzugten Ausführungsform zu entnehmen. Die Darstellung beschränkt sich auf die Hochdruckpumpe 2. Das in den Pumpenkopf 7 integrierte Niederdruckspeichervolumen 6 wird hier von einem Wellbalg 11 begrenzt, der somit den beweglichen Kolben 9 ersetzt. Der Wellbalg 11 trennt das Niederdruckspeichervolumen 6 von einem weiteren Volumen 13, das über die Rücklaufleitung 14 an den Tank 15 angeschlossen ist. Die Rückstellung des Wellbalgs 11 kann optional durch eine in der Fig. 2 angedeutete Feder 12 unterstützt werden, die hierzu im Volumen 13 angeordnet ist.

Eine dritte bevorzugte Ausführungsform einer erfindungsgemäßen Kraftstofffördereinrichtung ist der Fig. 3 zu entnehmen. Hier wird das Element 8 durch eine elastisch verformbare Membran 10 gebildet, die sowohl aus Metall, z. B. aus Stahl, als auch aus Kunststoff, z. B. aus PTFE, gefertigt sein kann. Die Membran 10 bewirkt eine Volumenänderung des Niederdruckspeichervolumens 6 durch Verformung. Zwar ist die Verformung der Membran 10 elastisch, so dass sie sich allein in ihre Ausgangsform zurückzustellen vermag. Die Rückstellung kann jedoch durch eine im Volumen 13 optional angeordnete Feder 12 analog der Fig. 2 unterstützt werden (nicht dargestellt).

## Patentansprüche

1. Kraftstofffördereinrichtung für kryogene Kraftstoffe, umfassend eine Vorförderpumpe (1) und eine Hochdruckpumpe (2), wobei die Hochdruckpumpe (2) einen hin und her beweglichen Kolben (3) aufweist, der einen Kompressionsraum (4) begrenzt, wobei der Kompressionsraum (4) über ein Saugventil (5) mit einem Niederdruckspeichervolumen (6) verbindbar ist, das über die Vorförderpumpe (1) mit kryogenem Kraftstoff befüllbar ist, **dadurch gekennzeichnet, dass** das Niederdruckspeichervolumen (6) durch ein bewegliches und/oder elastisch verformbares Element (8) begrenzt wird, wobei vorzugsweise das Element (8) ein hin und her beweglicher Kolben (9), eine elastisch verformbare Membran (10) oder ein Well- oder Faltenbalg (11) ist.

2. Kraftstofffördereinrichtung nach Anspruch 1,
**dadurch gekennzeichnet, dass** das Niederdruckspeichervolumen (6) in die Hochdruckpumpe (2) integriert ist, vorzugsweise im Bereich eines Pumpenkopfes (7) der Hochdruckpumpe (2).

3. Kraftstofffördereinrichtung nach Anspruch 2,
**dadurch gekennzeichnet, dass** das bewegliche und/oder elastisch verformbare Element (8) von der Federkraft einer Feder (12) beaufschlagt ist, die vorzugsweise außerhalb des Niederdruckspeichervolumens (6) angeordnet ist.

4. Kraftstofffördereinrichtung nach einem der vorhergehenden Ansprüche,
**dadurch gekennzeichnet, dass** das bewegliche und/oder elastisch verformbare Element (8) das Niederdruckspeichervolumen (6) von einem weiteren Volumen (13) trennt, das über eine Rücklaufleitung (14) mit einem Tank (15) zur Bevorratung des kryogenen Kraftstoffs verbunden oder verbindbar ist.

5. Kraftstofffördereinrichtung nach Anspruch 4,
**dadurch gekennzeichnet, dass** in Abhängigkeit von der Lage des Elements (8) das Niederdruckspeichervolumen (6) mit der Rücklaufleitung (14) verbindbar ist, so dass das Element (8) zugleich als Druckbegrenzungseinrichtung einsetzbar ist.

6. Kraftstofffördereinrichtung nach einem der vorhergehenden Ansprüche,
**dadurch gekennzeichnet, dass** die Vorförderpumpe (1) als Seitenkanalpumpe oder als Kreiselpumpe ausgeführt ist.

7. Verfahren zum Betreiben einer Kraftstofffördereinrichtung für kryogene Kraftstoffe, bei dem der kryogene Kraftstoff mittels einer Vorförderpumpe (1) einer Hochdruckpumpe (2) zugeführt wird,
wobei zumindest ein Teil der Fördermenge der Vorförderpumpe (1) in einem Niederdruckspeichervolumen (6), das in die Hochdruckpumpe (2) integriert ist, vor der Förderung auf Hochdruck zwischengespeichert wird, **dadurch gekennzeichnet, dass** das Niederdruckspeichervolumen (6) durch ein bewegliches und/oder elastisch verformbares Element (8) begrenzt wird, wobei vorzugsweise das Element (8) ein hin und her beweglicher Kolben (9), eine elastisch verformbare Membran (10) oder ein Well- oder Faltenbalg (11) ist.

8. Verfahren nach Anspruch 7,
**dadurch gekennzeichnet, dass** der über einen Pumpenhub gemittelte maximale Volumenstrom der Hochdruckpumpe (2) bei der Auslegung der Vorförderpumpe (1) zugrunde gelegt wird.

## Claims

1. Fuel supply device for cryogenic fuels, comprising a pre-supply pump (1) and a high-pressure pump (2), wherein the high-pressure pump (2) has a reciprocally movable piston (3) which delimits a compression chamber (4), wherein the compression chamber (4) is connectable via a suction valve (5) to a low-pressure storage volume (6) which can be filled with cryogenic fuel via the pre-supply pump (1), **characterized in that** the low-pressure storage volume (6) is delimited by a movable and/or elastically deformable element (8), the element (8) preferably being a reciprocally movable piston (9), an elastically deformable diaphragm (10) or a corrugated or folding bellows (11).

2. Fuel supply device according to Claim 1, **characterized in that** the low-pressure storage volume (6) is integrated in the high-pressure pump (2), preferably in the region of a pump head (7) of the high-pressure pump (2).

3. Fuel supply device according to Claim 2, **characterized in that** the movable and/or elastically deformable element (8) is acted upon by the spring force of a spring (12) which is preferably arranged outside the low-pressure storage volume (6).

4. Fuel supply device according to one of the preceding claims,
**characterized in that** the movable and/or elastically deformable element (8) separates the low-pressure storage volume (6) from a further volume (13) which is connected or connectable via a return line (14) to a tank (15) for storing the cryogenic fuel.

5. Fuel supply device according to Claim 4, **characterized in that**, depending on the position of the element (8), the low-pressure storage volume (6) is connectable to the return line (14), and therefore the element (8) is simultaneously usable as a pressure-limiting device.

6. Fuel supply device according to one of the preceding claims, **characterized in that** the pre-supply pump (1) is in the form of a side-channel pump or in the form of a centrifugal pump.

7. Method for operating a fuel supply device for cryogenic fuels, in which the cryogenic fuel is supplied to a high-pressure pump (2) by means of a pre-supply pump (1),
wherein at least a portion of the output of the pre-supply pump (1) is temporarily stored in a low-pressure storage volume (6), which is integrated in the high-pressure pump (2), before being supplied at high pressure, **characterized in that** the low-pressure storage volume (6) is delimited by a movable and/or elastically deformable element (8), the element (8) preferably being a reciprocally movable piston (9), an elastically deformable diaphragm (10) or a corrugated or folding bellows (11).

8. Method according to Claim 7,
**characterized in that** the maximum volumetric flow, averaged over a pump stroke, of the high-pressure pump (2) is used as the basis for the design of the pre-supply pump (1).

## Revendications

1. Dispositif d'alimentation en carburant pour carburants cryogéniques, comprenant une pompe de préalimentation (1) et une pompe haute pression (2), la pompe haute pression (2) présentant un piston (3) à mouvement alternatif qui délimite une chambre de compression (4), la chambre de compression (4) pouvant être reliée par l'intermédiaire d'une soupape d'aspiration (5) à un volume de stockage basse pression (6), qui peut être rempli de carburant cryogénique par l'intermédiaire de la pompe de préalimentation (1), **caractérisé en ce que** le volume de stockage basse pression (6) est délimité par un élément mobile et/ou élastiquement déformable (8), l'élément (8) étant de préférence un piston (9) à mouvement alternatif, une membrane élastiquement déformable (10) ou un soufflet ondulé ou plissé (11).

2. Dispositif d'alimentation en carburant selon la revendication 1,
**caractérisé en ce que** le volume de stockage basse pression (6) est intégré dans la pompe haute pression (2), de préférence dans la zone d'une tête de pompe (7) de la pompe haute pression (2).

3. Dispositif d'alimentation en carburant selon la revendication 2,
**caractérisé en ce que** l'élément mobile et/ou élastiquement déformable (8) est sollicité par la force de ressort d'un ressort (12), qui est de préférence agencé à l'extérieur du volume de stockage basse pression (6) .

4. Dispositif d'alimentation en carburant selon l'une quelconque des revendications précédentes,
**caractérisé en ce que** l'élément mobile et/ou élastiquement déformable (8) sépare le volume de stockage basse pression (6) d'un autre volume (13) qui est relié ou peut être relié par l'intermédiaire d'une conduite de retour (14) à un réservoir (15) pour l'approvisionnement du carburant cryogénique.

5. Dispositif d'alimentation en carburant selon la revendication 4,
**caractérisé en ce qu'**en fonction de la position de l'élément (8), le volume de stockage basse pression (6) peut être relié à la conduite de retour (14), de telle sorte que l'élément (8) peut être utilisé en même temps en tant que dispositif de limitation de pression.

6. Dispositif d'alimentation en carburant selon l'une quelconque des revendications précédentes, **caractérisé en ce que** la pompe de préalimentation (1) est réalisée sous forme de pompe à canal latéral ou sous forme de pompe centrifuge.

7. Procédé pour faire fonctionner un dispositif d'alimentation en carburant pour carburants cryogéniques, dans lequel le carburant cryogénique est amené à une pompe à haute pression (2) au moyen d'une pompe de préalimentation (1),
dans lequel au moins une partie du débit de la pompe de préalimentation (1) est stockée temporairement dans un volume de stockage basse pression (6) intégré à la pompe haute pression (2) avant l'alimentation à haute pression, **caractérisé en ce que** le volume de stockage basse pression (6) est limité par un élément mobile et/ou élastiquement déformable (8), l'élément (8) étant de préférence un piston (9) à mouvement alternatif, une membrane élastiquement déformable (10) ou un soufflet ondulé ou plissé (11).

8. Procédé selon la revendication 7,
**caractérisé en ce que** le débit volumique maximal de la pompe haute pression (2), moyenné sur une course de la pompe, est pris comme base lors de la conception de la pompe de préalimentation (1).
